(19) Europäisches Patentamt
European Patent Office
Office européen des brevets

(11) EP 4 375 751 A1

(12) **EUROPEAN PATENT APPLICATION**

(43) Date of publication:
**29.05.2024 Bulletin 2024/22**

(21) Application number: **23212257.2**

(22) Date of filing: **27.11.2023**

(51) International Patent Classification (IPC):
***G03G 9/087*** *(2006.01)* ***G03G 9/093*** *(2006.01)*
***C08G 63/16*** *(2006.01)*

(52) Cooperative Patent Classification (CPC):
(C-Sets available)
**G03G 9/08755; C08G 63/183; C08G 63/20; C08G 63/672; C08L 67/025; G03G 9/08795; G03G 9/08797; G03G 9/09328; G03G 9/09371; G03G 9/09392** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.11.2022 JP 2022189373**
**11.10.2023 JP 2023175708**

(71) Applicant: **Ricoh Company, Ltd.**
**Tokyo 143-8555 (JP)**

(72) Inventors:
- **MIZOGUCHI, Yuka**
  **Tokyo, 143-8555 (JP)**
- **TAKEI, Akio**
  **Tokyo, 143-8555 (JP)**
- **WATANABE, Junichi**
  **Tokyo, 143-8555 (JP)**
- **SAITOH, Akinori**
  **Tokyo, 143-8555 (JP)**
- **YUKIKAWA, Masahiro**
  **Tokyo, 143-8555 (JP)**

(74) Representative: **Marks & Clerk LLP**
**15 Fetter Lane**
**London EC4A 1BW (GB)**

(54) **RESIN PARTICLE, TONER, TONER ACCOMMODATING UNIT, IMAGE FORMING APPARATUS, AND IMAGE FORMING METHOD**

(57) A resin particle contains an amorphous resin, a crystalline resin C containing a biomass-derived resin, and at least one of polyethylene terephthalate or polybutylene terephthalate, wherein the resin particle has a core-shell structure comprising a core resin and a shell resin, the core resin comprises the crystalline resin C, and the proportion of the total mass of the biomass-derived resin, the polyethylene terephthalate, and the polybutylene terephthalate to the resin particle at 100 percent by mass is 30 or more percent by mass.



Processed by Luminess, 75001 PARIS (FR)

(Cont. next page)

(52) Cooperative Patent Classification (CPC): (Cont.)

C-Sets
**C08L 67/025, C08L 67/025, C08L 67/02,**
**C08L 91/06, C08K 3/04**

## Description

CROSS-REFERENCE TO RELATED APPLICATIONS

This patent application is based on and claims priority pursuant to 35 U.S.C. §119 to Japanese Patent Application Nos. 2022-189373 and 2023-175708, filed on November 28, 2022 and October 11, 2023, respectively, in the Japan Patent Office, the entire disclosures of which are hereby incorporated by reference herein.

BACKGROUND

Technical Field

The present disclosure relates to a resin particle, a toner, a toner accommodating unit, an image forming apparatus, and an image forming method.

Description of the Related Art

Toners are required to reduce their environmental burden. Researchers have thus studied ways to solve this issue, such as developing a toner with an enhanced low temperature fixability to save power, reducing the energy consumed in manufacturing toner, and adopting biomass-derived resin as a binder resin.

Population growth accelerates energy consumption, causing resource depletion. This situation raises the priority of resource conservation, energy conservation, and resource recycling. Specifically, local towns and cities have already started recycling polyethylene terephthalate (PET) and polybutylene terephthalate (PBT) and the recycled products are used for clothes and containers. Reusing recycled PET and PBT is also expected in new application fields. From this point of view, toner (recycled toner) containing a binder resin made from collected polyethylene terephthalate has already appeared.

Currently, toner should enhance its functions, using the plant-based resin mentioned above for less environmental burden. However, enhancing the toner's low temperature fixability is associated with degrading its high temperature storage stability.

Technologies using crystalline resins containing a significant amount off biomass have been proposed in Japanese Patent No. 4512631 (Japanese Unexamined Patent Application Publication No. 2009-134007) and Japanese Patent No. 5717615 (Japanese Unexamined Patent Application Publication No. 2012-133356). However, they need more improvements to balance reducing the environmental burden, low temperature fixability, and storage stability.

Thus, these do not satisfy the quality of toner regarding environmental burden, low temperature fixability, and high temperature storage stability as mentioned above.

SUMMARY

According to the present disclosure, a resin particle is provided that imposes less burden on the environment and has excellent low temperature fixability and high temperature storage stability.

According to embodiments of the present disclosure, a resin particle is provided that contains an amorphous resin, a crystalline resin C containing a biomass-derived resin, and at least one of polyethylene terephthalate and polybutylene terephthalate, wherein the resin particle has a core-shell structure comprising a core resin and a shell resin, the core resin comprises the crystalline resin C, and the proportion of the total mass of the biomass-derived resin, the polyethylene terephthalate, and the polybutylene terephthalate to the resin particle at 100 percent by mass is 30 or more percent by mass.

As another aspect of embodiments of the present disclosure, a toner is provided that contains the resin particle mentioned above.

As another aspect of embodiments of the present disclosure, a toner accommodating unit accommodating the toner mentioned above is provided.

As another aspect of embodiments of the present disclosure, an image forming apparatus is provided that includes a latent electrostatic image bearer, a latent electrostatic image forming device for forming a latent electrostatic image on the latent electrostatic image bearer, a developing device for developing the latent electrostatic image on the latent electrostatic image bearer with the toner mentioned above to form a toner image, a transfer device for transferring the toner image onto the surface of a recording medium, and a fixing device to fix the toner image on the surface of the recording medium.

As another aspect of embodiments of the present disclosure, an image forming method is provided that includes forming a latent electrostatic image on a latent electrostatic image bearer, developing the latent electrostatic image

formed on the latent electrostatic image bearer with the toner mentioned above to form a toner image, transferring the toner image formed on the latent electrostatic image bearer to the surface of a recording medium, and fixing the toner image on the surface of the recording medium.

## BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating an image forming apparatus according to an embodiment of the present invention; and
FIG. 2 is a schematic diagram illustrating an example of a process cartridge using an embodiment of the present invention.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

## DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

The resin particle of the present disclosure has a core-shell structure of a core resin with a shell resin.

Environment-friendly resin particles should contain more biomass and recycled resins in the amorphous resins of the core and, in addition, in the shell and other material. The plasticity of a resin can be enhanced by using a crystalline polyester resin, which leads to enhancing the low temperature fixability.

Moreover, a biomass-derived crystalline polyester resin can balance the environmental friendliness and low temperature fixability. Furthermore, polyethylene terephthalate (PET) or polybutylene terephthahlate (PBT) as a recycled product has an aromatic ring backbone. This structure reinforces the toner's strength, balancing the environmental friendliness and high temperature storage stability, which has a negative impact on the low temperature fixability. A resin particle containing 30 or more percent by mass of biomass-derived resin, PET, and PBT is likely to be recognized as environment friendly.

The resin particle of the present disclosure contains a biomass-derived resin and at least one of PET and PBT, each accounting for 5 or more percent by mass of the resin particle.

Suppose this resin proportion is increased to 50 or more percent by mass. In that case, such a proportion significantly boosts the impact on the environment, greatly affecting society.

In addition, a difference of 1.7 or less between the solution parameter (SP) value of the biomass-derived resin and the SP value of the core resin of the resin particle makes the interior of the resin particle sufficiently compatible, having a favorable impact on the low temperature fixability.

The difference between the SP values is preferably 1.6 or less.

In addition, a difference of 1.8 or more between the SP value of the biomass-derived resin and the SP value of the shell resin of the resin particle makes the crystalline polyester resin present in the core unlikely to be compatible with the resin forming the shell, which protects the core from heat. This difference thus has a positive impact on the high temperature storage stability.

The difference between the SP values is more preferably 2.0 or more.

The resin particle of the present invention includes any particle satisfying the above conditions. The toner containing the resin particle further increases its impact.

The resin particle and toner of the present disclosure are described below. It is to be noted that the following embodiments are not limiting the present disclosure and any deletion, addition, modification, change, etc. can be made within a scope in which man in the art can conceive including other embodiments, and any of which is included within the scope of the present disclosure as long as the effect and feature of the present disclosure are demonstrated.

The resin particle of the present disclosure is manufactured in the following manner.

Preparing Oil Phase

The method of manufacturing the resin particle of the present disclosure includes preparing an oil phase, where components such as a resin, colorant, cross-linking component, and wax are dissolved or dispersed in an organic solvent. Specifically, substances such as resin and a colorant are slowly added to an organic solvent during stirring to dissolve or disperse them in the solvent. For dispersion, known devices such as a bead mill or disk mill can be used.

The materials used in preparing an oil phase are described below.

Biomass-derived Resin

A biomass-derived resin contains a plant-based compound as a feedstock. The alcohol and acid components, each with a ratio adjusted between petroleum-based and plant-based, can fine-tune the environmental friendliness and toner quality. The content of the biomass resin in the present disclosure is calculated based on the amount of the monomer used in manufacturing.

An unclear resin monomer composition can be clarified by determining the concentration of carbon-14 and identifying the monomer as follows.

Concentration of Carbon-14

The concentration of carbon-14 (carbon-14 concentration) of the resin particle relating to an embodiment is 10.8 or more pMC, preferably 11 or more pMC, more preferably 20 or more pMC, and furthermore preferably 30 or more pMC. A carbon-14 concentration below 10.8 pMc is likely to be recognized as a low degree of biomass, which does not reduce the environmental burden. The degree of biomass is described later.

Carbon-14 is naturally present in the atmosphere; some of it is taken into plants through photosynthesis. Carbon-14 in plants is at equilibrium about concentration (107.5 pMC) with carbon-14 in the atmosphere, Carbon is not taken into a plant anymore when the plant ceases to be alive. Then carbon-14 concentration decreases according to the radioactive half life of 5,730 years of carbon-14. Carbon-14 is little detected from fossil resources originating from life forms because several thousand to hundred million years have passed since the live forms died.

The term "pMC" represents percent Modern Carbon, defined as the ratio of $C^{14}$ to $C^{12}$ in biomass in the 1950s being 100 pMC, However, carbon-14 concentration in the atmosphere increases yearly, so the factor for correcting carbon-14 concentration is regulated. Specifically, the correction factor adjusted for each year is used.

Carbon-14 concentration is also represented by the degree of biomass calculated from the following relationship 1.

$$\text{Degree of biomass (percent)} = \text{carbon-14 concentration (pMC)}/107.5 \times 100$$

Relationship 1

A 10.8 or more pMC of carbon-14 concentration represents the degree of biomass is 10 or more percent. A 10 or more percent of the degree of biomass is adequate from a carbon neutral standpoint.

Measuring carbon-14 concentration is not particularly limited and can be suitably selected to suit to a particular application. Radiocarbon dating is particularly preferable.

The procedure of measuring by radiocarbon dating is to combust resin particles, reducing carbon dioxide ($CO_2$) to obtain graphite (C). Carbon-14 concentration of graphite is measured by accelerator mass spectroscopy (AMS) analyzer, available from Beta Analytic. This measuring method by AMS is disclosed in Japanese Patent No. 4050051, for example.

Recycle-derived Resin

The recycle-based resin for use in the present disclosure is obtained by processing recycled products into flakes of PET and PBT as feedstocks with a weight average molecular weight Mw of from about 30,000 to about 90,000. The recycle-based resin is not limited by molecular weight distribution, composition, method of manufacturing, shapes in use, and the like of PET and PBT. The recycle-based resin in the present disclosure is not limited to recycled resin products. It includes non-commercialized items such as fiber waste and pellets. The ratio of recycled PET can be adjusted in synthesizing polyester resins, tuning the environmental friendliness and toner quality.

Amorphous Resin

The amorphous resin is preferably an amorphous polyester resin. Of the amorphous resin, linear polyester resin is preferable and unmodified polyester resin is particularly preferable. Moreover, the environment-friendly resin is preferable.
The unmodified polyester resin is obtained using a polyol with a polycarboxylic acid including polycarboxylic anhydride, polycarboxylic acid ester, and their derivatives. However, it is not modified with a substance such as an isocyanate compound.
Preferably, the amorphous polyester resin is free of a urethane or urea bonding.

Amorphous Polyester Resin

The amorphous polyester resin for use in the present disclosure are preferably obtained using a plant-derived alcohol component and an acid component to adjust the degree of environmental friendliness. Also, using a polyester resin synthesized from PET and PBT is preferable.
As the plant-derived alcohol component, propylene glycol is preferable, while terephthalic acid and succinic acid are preferable as the acid component. However, the plant-derived components are not particularly limited to those above-mentioned. Any plant-derived is usable.
Recycled products are processed into PET and PBT flakes with a weight average molecular weight Mw of from about 30,000 to about 100,000. The molecular weight distribution, composition, method of manufacturing, shapes in the use of PET and PBT are not limiting. In addition, it is not limited to recycled resins. Items that are out of specification, such as fiber waste or pellets can be also used.
The amorphous polyester resin contains a dicarboxylic acid component, preferably containing terephthalic acid in an amount of 50 or more mol percent. This proportion is advantageous to enhance the high temperature storage stability. One of the polyols is a diol.
Specific examples of diol includes, but are not limited to, an adduct of bisphenol A with alkylene (having two or three carbon atoms) oxide (average adduction mol number of from 1 to 10) such as polyoxypropylene(2,2)-2,2-bis(4-hydroxyphenyl)propane, polyoxyethylene(2,2)-2,2-bis(4-hydroxyphenyl)propane, ethylene glycol, propylene glycol, hydrogenated bisphenol A, and an adduct of hydrogenated bisphenol A with an alkylene (having two or three carbon atoms) oxide (average adduction mol number of from 1 to 10).
These can be used alone or in combination.
A specific example of the polycarboxylic acid is dicarboxylic acid.
Specific examples of dicarboxylic acid include, but are not limited to, adipic acid, phthalic acid, isophthalic acid, terephthalic acid, fumaric acid, maleic acid, and succinic acid substituted with an alkyl group having 1 to 20 carbon atoms or alkenyl group having 2 to 20 carbon atoms such as dodecenyl succinic acid and octyl succinic acid.
Of these, dicarboxylic acid containing a plant-derived succinic acid of saturated aliphatic series is preferable.
The level of carbon neutral becomes high because of its being plant-origin. The saturated aliphatic series enhances the recrystallization of crystalline polyester resin, increases its aspect ratio, and ameliorates its low temperature fixability.
These can be used alone or in combination.
The amorphous polyester resin may optionally contain at least either a tri- or higher carboxylic acid or tri- or higher alcohol to adjust the acid value and hydroxyl value.
Specific examples of tri- or higher carboxylic acid include, but are not limited to, trimellitic acid, pyromellitic acid, and their anhydrides.
Specific examples of tri- or higher alcohol include, but are not limited to, glycerin, pentaerythritol, and trimethylol propane.
The molecular weight of the amorphous polyester resin is not particularly limited and can be suitably selected to suit to a particular application. The weight average molecular weight Mw is preferably from 3,000 to 10,000 as measured by gel permeation chromatography (GPC). The number average molecular weight Mn is preferably from 1,000 to 4,000.

The ratio of Mw/Mn is preferably from 1.0 to 4.0.

A molecular weight not lower than the lower limit mentioned above prevents the toner's high temperature storage stability and durability under stress such as stirring in a developing device from lowering. A molecular weight up to the upper limit mentioned above prevents the toner's viscoelasticity during the melting process from increasing and its low temperature fixability from lowering.

The weight average molecular weight Mw is more preferably from 4,000 to 7,000. The weight average molecular weight Mw is more preferably from 1,500 to 3,000. The ratio of Mw/Mn is more preferably from 1.0 to 3.5.

The acid value of the amorphous polyester resin is not particularly limited and can be suitably selected to suit to a particular application. The acid value is preferably from 1 to 50 mgKOH/g and more preferably from 5 to 30 mgKOH/g. An acid value of 1 mgKOH/g or greater tends to negatively charge a toner and enhances the affinity between paper and the toner during fixing on the paper, enhancing the low temperature fixability. An acid value of 50 mgKOH/g or less prevents the charging stability, particularly charging stability to environmental fluctuation, from deteriorating.

The hydroxyl value of the amorphous polyester resin is not particularly limited and can be suitably selected to suit to a particular application. The value is preferably 5 mgKOH/g or greater.

The glass transition temperature Tg of the amorphous polyester resin is preferably from 40 to 80 degrees C and more preferably from 50 to 70 degrees C. A glass transition temperature of 40 or higher degrees C enhances the high temperature storage stability and the durability to stress such as stirring in a developing device while enhancing resistance to filming. A glass transition temperature of 80 or lower degrees C suitably transforms the shape of toner with heat and pressure in fixing, thereby enhancing the low temperature fixability.

The molecular structure of the amorphous polyester resin can be analyzed by measuring a solution or solid using methods such as NMR, X ray diffraction, GC/MS, LC/MS, and infrared (IR) absorption. Amorphous polyester resin can be readily detected as a substance without absorbing $965 \pm 10\ cm^{-1}$ and $990 \pm cm^{-1}$ based on $\delta$CH (out of plane bending vibration) of olefin in the infrared absorption spectrum.

The content of the amorphous polyester resin is not particularly limited and can be suitably selected to suit to a particular application. The number of parts of the amorphous polyester resin to 100 parts by mass of the toner mentioned above is preferably from 50 to 90 parts by mass and more preferably from 60 to 80 parts by mass. Fifty or more parts by mass reduces the deterioration of the dispersibility of a pigment and releasing agent in a toner and minimizes fogging and disturbance of an image. Ninety or fewer parts by mass prevents a decrease in the content of the crystalline polyester resin and deterioration of the low temperature fixability. Content in the more preferable region specified above is advantageous for achieving excellent image quality and low temperature fixability.

Crystalline Resin

The toner of the present disclosure preferably contains a crystalline resin as an additive to enhance the low temperature fixability.

The crystalline resin is not particularly limited as long as it has crystallinity and can be suitably selected to suit to a particular application. The crystalline resin includes, for example, polyester resin, polyurethane resin, polyurea resin, polyamide resin, polyether resin, vinyl resin, and modified crystalline resin. These can be used alone or in combination.

Crystalline Polyester Resin

The crystalline polyester resin is described below.

The crystalline polyester resin, also referred to as crystalline polyester resin C, has a high crystallinity. As a result, it has a heat-melt property demonstrating a sharp change in viscosity around the fixing starting temperature.

Combinational use of the crystalline polyester resin C with the amorphous polyester resin affords a toner with good high temperature storage stability and low temperature fixability.

Specifically, this combinational use demonstrates good high temperature storage stability due to the crystallinity until almost up to the melt starting point. It causes a sharp decrease in viscosity attributable to the melting (sharp melting property) of the crystalline polyester resin C at the melt starting point. At this point, the crystalline polyester resin C becomes compatible with the amorphous polyester resin, which makes the viscosity drop sharply, resulting in good fixing.

The crystalline polyester resin is prepared by a polyol with a polycarboxylic acid including a polycarboxylic anhydride and polycarboxylic acid ester or their derivatives. In the present disclosure, the crystalline polyester resin refers to a substance obtained by using a polyol and a polycarboxylic acid including a polycarboxylic anhydride and polycarboxylic acid ester or their derivatives as described above. The crystalline polyester resin excludes modified polyester resin obtained by prepolymer and resin obtained by cross-linking and/or elongating the prepolymer.

Polyhydric Alcohol

The polyhydric alcohol is not particularly limited and can be suitably selected to suit to a particular application. Examples include, but are not limited to, diol and tri- or higher alcohols. One example of diol is saturated aliphatic diol. The saturated aliphatic diol includes straight chain saturated aliphatic diol and branch-chain saturated aliphatic diol. Of these, straight-chain saturated aliphatic diol is preferable and straight-chain saturated aliphatic diol having 2 to 12 carbon atoms is more preferable. A saturated aliphatic diol of a branch type lowers the crystallinity of the crystalline polyester resin, which may drop its melting point. Practical saturated aliphatic diol having 13 or more carbon atoms is not readily available.
Specific examples of the saturated aliphatic diol include, but are not limited to, ethylene glycol, 1,3-propanediol, 1,4-butanediol, 1,5-pentanediol, 1,6-hexanediol, 1,7-heptanediol, 1,8 -octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,14-eicosandecanediol. Of these, ethylene glycol, 1,4-butanediol, 1,6-hexanediol, 1,8-octanediol, 1,9-nonanediol, 1,10-decanediol, and 1,12-dodecanediol are preferable to enhance crystallinity of the crystalline polyester resin and achieve excellent sharp melting thereof.
Specific examples of the tri- or higher alcohol having include, but are not limited to, glycerin, trimethylol ethane, trimethylol propane, and pentaerythritol. These may be used alone or in a combination of two or more thereof.

Polycarboxylic Acid

The polycarboxylic acid is not particularly limited and can be suitably selected to suit to a particular application. Examples include, but are not limited to, dicarboxylic acid and tri- or higher carboxylic acid.
Specific examples of dicarboxylic acids include, but are not limited to, saturated aliphatic dicarboxylic acid such as oxalic acid, succinic acid, glutaric acid, adipic acid, suberic acid, azelaic acid, sebacic acid, 1,9-nonane dicarboxylic acid, 1,10-decane dicarboxylic acid, 1,12-dodecane dicarboxylic acid, 1,14-tetradecane dicarboxylic acid, and 1, 18-octadecane dicarboxylic acid and aromatic dicarboxylic acids such as phthalic acid, isophthalic acid, terephthalic acid, naphthalene-2,6-dicarboxylic acid, malonic acid, and mesaconic acid. They include anhydrides or lower alkylesters (1 to 3 carbon atoms) thereof.
Plant-derived saturated aliphatic having 12 or less carbon atoms is preferable from a carbon neutral point of view.
Specific examples of the tri- or higher carboxylic acids include, but are not limited to, 1,2,4-benzene tricarboxylic acid, 1,2,5-benzene tricarboxylic acid, 1,2,4-naphtalene tricarboxylic acid, and their anhydrides or lower alkyl esters (1 to 3 carbon atoms). These may be used alone or in a combination of two or more thereof.
The crystalline polyester resin is preferably formed of a straight chain saturated aliphatic dicarboxylic acid with 4 to 12 carbon atoms and a straight chain saturated aliphatic diol with 2 to 12 carbon atoms. This crystalline polyester resin thus demonstrates high crystallinity and excellent sharp melting, thereby achieving excellent low temperature fixability.
One way of controlling the crystallinity and the softening point of the crystalline polyester resin is to design and use a non-linear polyester obtained through polycondensation in which, during polyesterization, polyol including tri- or higher alcohol such as glycerin is added to the alcohol component and polycarboxylic acid including tri- or higher carboxylic acid such as trimellitic anhydride is added.
The molecular structure of the crystalline polyester resin in the present disclosure can be analyzed by measuring a solution or solid by methods such as NMR, X ray diffraction, GC/MS, LC/MS, and infrared (IR) absorption measuring.
The crystalline polyester resin C can be simply detected as a substance that has absorption in the range of $965 \pm 10$ $cm^{-1}$ and $990 \pm$ $cm^{-1}$ based on $\delta$CH (out of plane bending vibration) of olefin in an infrared absorption spectrum.
Based on the knowledge about the molecular weight that a resin having a low molecular weight and a sharp molecular weight distribution has good low temperature fixability, and a resin containing a component with a small molecular weight in a large amount has a poor high temperature storage stability, the inventors of the present invention have found that the molecular weight of the crystalline polyester resin C preferably has a peak in a range of from 3.5 to 4.0, a peak half width value of 1.5 or less, a weight average molecular weight (Mw) of from 3,000 to 30,000, a number average molecular weight (Mn) of from 1,000 to 10,000, and an Mw/Mn of from 1 to 10 in the graph of the molecular weight distribution due to gel permeation chromatography (GPC) of a portion soluble in o-dichlorobenzene with an X axis of log (M) and an Y axis of a molecular weight represented in percent by mass.
The weight average molecular weight Mw is more preferably from 5,000 to 15,000, the number average molecular weight Mn is more preferably from 2,000 to 10,000, and the ratio of Mw/Mn is more preferably from 1 to 5.
The acid value of the crystalline polyester resin is preferably 5 or more mgKOH/g to achieve a target low temperature fixability in terms of the affinity between paper and resin and more preferably 7 or more mgKOH/g to manufacture fine particles by a phase-transfer emulsification. On the other hand, it is preferably 45 or less mgKOH/g to enhance the hot offset property. The hydroxyl value of a crystalline polymer is preferably from 0 to 50 mgKOH/g and

more preferably from 5 to 50 mgKOH/g to achieve a target low temperature fixability and good chargeability.

Colorant

The suitable colorant (coloring material) in the present disclosure includes known dyes and pigments.
Specific examples include, but are not limited to, carbon black, Nigrosine dyes, black iron oxide, Naphthol Yellow S, Hansa Yellow (10G, 5G and G), Cadmium Yellow, yellow iron oxide, loess, chrome yellow, Titan Yellow, polyazo yellow, Oil Yellow, Hansa Yellow (GR, A, RN and R), Pigment Yellow L, Benzidine Yellow (G and GR), Permanent Yellow (NCG), Vulcan Fast Yellow (5G and R), Tartrazine Lake, Quinoline Yellow Lake, Anthrazane Yellow BGL, isoindolinone yellow, red iron oxide, red lead, orange lead, cadmium red, cadmium mercury red, antimony orange, Permanent Red 4R, Para Red, Faise Red, p-chloro-o-nitroaniline red, Lithol Fast Scarlet G, Brilliant Fast Scarlet, Brilliant Carmine BS, Permanent Red (F2R, F4R, FRL, FRLL and F4RH), Fast Scarlet VD, Vulcan Fast Rubine B, Brilliant Scarlet G, Lithol Rubine GX, Permanent Red F5R, Brilliant Carmine 6B, Pigment Scarlet 3B, Bordeaux 5B, Toluidine Maroon, Permanent Bordeaux F2K, Helio Bordeaux BL, Bordeaux 10B, BON Maroon Light, BON Maroon Medium, Eosin Lake, Rhodamine Lake B, Rhodamine Lake Y, Alizarine Lake, Thioindigo Red B, Thioindigo Maroon, Oil Red, Quinacridone Red, Pyrazolone Red, polyazo red, Chrome Vermilion, Benzidine Orange, perynone orange, Oil Orange, cobalt blue, cerulean blue, Alkali Blue Lake, Peacock Blue Lake, Victoria Blue Lake, metal-free Phthalocyanine Blue, Phthalocyanine Blue, Fast Sky Blue, Indanthrene Blue (RS and BC), Indigo, ultramarine, Prussian blue, Anthraquinone BlueFast Violet B, Methyl Violet Lake, cobalt violet, manganese violet, dioxane violet, Anthraquinone Violet, Chrome Green, zinc green, chromium oxide, viridian, emerald green, Pigment Green B, Naphthol Green B, Green Gold, Acid Green Lake, Malachite Green Lake, Phthalocyanine Green, Anthraquinone Green, titanium oxide, zinc oxide, lithopone and the like.
These materials can be used alone or in combination.

Organic Solvent

As the organic solvent, a volatile organic solvent with a boiling point lower than 100 degrees C is preferable to readily remove the organic solvent later.
Specific examples of the organic solvent include, but are not limited to, toluene, xylene, benzene, carbon tetrachloride, methylene chloride, 1,2-dichloroethane, 1,1,2-trichloroethane, trichloroethylene, chloroform, monochlorobenzene, dichloroethylidene, methyl acetate, ethyl acetate, methylethyl ketone, methylisobuthyl ketone, methanol, ethanol, and isopropyl alcohol. These can be used alone or in combination. A resin having a polyester backbone is well dissolved or dispersed in an organic solvent such as ester-based solvents including methyl acetate, ethyl acetate, and butyl acetate or ketone-based solvents including methylethyl ketone and methyl isobutyl ketone. Of these, methyl acetate, ethyl acetate, and methyl ethyl ketone are particularly preferable to readily purge a dispersion of the organic solvent later.

Prepolymer

The resin particle of the present disclosure may furthermore optionally contain a prepolymer.
One of the prepolymers, reactive precursors, is a polyester with a group reactive with an active hydrogen group.
Specific examples of the group reactive with an active hydrogen group include, but are not limited to, an isocyanate group, an epoxy group, a carboxylic acid, and an acid chloride group. Of these, an isocyanate group is preferable to introduce a urethane or urea bond into an amorphous polyester resin.
The reactive precursor may have a branched structure attributed by at least one of tri- or higher alcohol and tri- or higher carboxylic acid.
One example of the polyester resin containing an isocyanate group is a reaction product of a polyisocyanate and a polyester resin with an active hydrogen group. One way of obtaining a polyester resin with an active hydrogen group is to poly condense a diol with a dicarboxylic acid or a tri- or higher alcohol with a tri-or higher carboxylic acid. A tri- or higher alcohol and a tri-or higher carboxylic acid provides a branched structure to a polyester resin with an isocyanate group.
Specific examples of the diols include, but are not limited to, aliphatic diols such as ethylene glycol, 1,2-propylene glycol, 1,3-propylene glycol, 1,4-butanediol, 2-methyl-1,3-propanediol, 1,5-pentanediol, 3-methyl-1,5-pentanediol, 1,6-hexanediol, 1,8-octanediol, 1,10-decanediol and 1,12-dodecanediol, diols having oxyalkylene groups such as diethylene glycol, triethylene glycol, dipropylene glycol, polyethylene glycol, polypropylene glycol and polytetramethylene glycol; diols having oxyalkylene groups such as diethylene glycol, triethylene glycol, dipropylene glycol, polyethylene glycol, polypropylene glycol and polytetramethylene ether glycol; alicyclic diols such as 1,4-cyclohexane dimethanol and hydrogenated bisphenol A; adducts of alicyclic diols with an alkylene oxide such as ethylene oxide, propylene oxide, and butylene oxide; bisphenols such as bisphenol A, bisphenol F, and bisphenol S; and adducts of bisphenols with an alkylene oxide such as ethylene oxide, propylene oxide, and butylene oxide. Of these, aliphatic diols having 3 to 10

carbon atoms such as 1,2-propylene glycol, 1,3-propylene glycol, 1,4-butanediol, 2-methyl-1,3-propanediol, 1,5-pentanediol, and 3-methyl-1,5-pentanediol are preferable to adjust the glass transition temperature of the polyester resin (A) to 20 degrees C or lower. Using these aliphatic diol at a proportion of 50 percent by mol or greater to the alcohol components in a resin is more preferable. These diols can be used alone or in combination.

A prepolymer having a resin chain with steric hindrance lowers the melt viscosity during fixing, thereby becoming more likely to easily demonstrate the low temperature fixability. Considering this preference, the main chain of an aliphatic diol preferably has the structure represented by the following Chemical Formula 1.

$$HO \left( CR_1R_2 \right)_n OH$$

Chemical Formula 1

In the Chemical Formula 1, $R_1$ and $R_2$ each independently represent hydrogen atoms or alkyl groups with 1 to 3 carbon atoms and n represents an odd integer of from 3 to 9. $R_1$ and $R_2$ each independently can be the same or different in the n repeating units.

The main chain of an aliphatic diol in the present disclosure refers to the carbon chain linked between the two hydroxy groups of the aliphatic diol by the minimal number. An odd number of carbon atoms in the main chain is preferable because crystallinity deteriorates by parity. In addition, aliphatic diol with at least one alkyl group having 1 to 3 carbon atoms in the side chain is preferable, which decreases the mutual action energy between the molecules in the main chain because of steric conformation.

Specific examples of the dicarboxylic acids include, but are not limited to, aliphatic dicarboxylic acids such as succinic acid, adipic acid, sebacic acid, dodecanedioic acid, maleic acid, and fumaric acid and aromatic dicarboxylic acids such as phthalic acid, isophthalic acid, terephthalic acid, naphthalene dicarboxylic acids. In addition, their anhydrides, lower (i.e., 1 to 3 carbon atoms) alkyl esterified compound, and halogenated compounds can be used. Of these, aliphatic dicarboxylic acid with 4 to 12 carbon atoms is preferable and using 50 percent by mass or greater of the carboxylic acid component in a resin to achieve a glass transition temperature Tg of a polyester resin of 20 degrees C or lower. These dicarboxylic acids can be used alone or in combination.

Specific examples of tri- or higher alcohols include, but are not limited to, tri- or higher aliphatic alcohols such as glycerin, trimethylolethane, trimethylolpropane, pentaerythritol, and sorbitol; tri- or higher polyphenols such as trisphenol PA, phenol novolac, and cresol novolac; and adducts of alkylene oxide such as ethylene oxide, propylene oxide, and butylene oxide with trihydric or higher polyphenols.

One example of tri or higher carboxylic acids is a tri- or higher aromatic carboxylic acid. Tri- or higher aromatic carboxylic acids with 9 to 20 carbon atoms such as trimellitic acid and pyromellitic acid are preferable. In addition, their anhydrides, lower (i.e., 1 to 3 carbon atoms) alkyl esterified compound, and halogenated compounds can be used.

Examples of the polyisocyanate include, but are not limited to, diisocyanate and tri-or higher isocyanate.

The polyisocyante is not particularly limited and can be suitably selected to suit to a particular application.

Specific examples include, but are not limited to,aromatic diisocyanates such as either or both of 1,3- and 1,4-phenylene diisocyanate, of 2,4- and 2,6-tolylene diisocyanate (TDI), of crude TDI, of 2,4'- and 4,4'-diphenyl methane diisocyanate (MDI), and of crude MDI [phosgenated compounds of crude diamonophenyl methane (condensed product of formaldehyde and aromatic amine (aniline) or with a their mixture; a mixture of diaminodiphenyl methane and a small amount (e.g., 5 to 20 percent by mass) of tri- or higher polyamine] : polyallyl polyisocyanate (PAPI) ], 1,5-naphtylene didsocyanate, 4,4',4"-triphenylmethane triisocyanate, m- and p-isochyanato phenylsupphonyl isocyanate; aliphatic diisocyanates such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate; alicyclic diisocyanates such as isophorone diisocyanate (IPDI), dicyclohexylmethane-4,4 '- diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate and 2,5- and 2, 6-norbornane diisocyanate; aromatic aliphatic diisocyanates such as m- and p-xylylene diisocyanate (XDI) and $\alpha,\alpha,\alpha',\alpha'$- tetramethylxylylene diisocyanate (TMXDI); tri- or higher polyisocyanates such as lysine triisocyanate and diisocyanate modified products of tri- or higher alcohols; and modified products of these isocyanates. Mixtures of two or more types mentioned above can be used.

Specific examples of the modified products of isocyanate include, but are not limited to, modified compounds having a urethane group, a carbodiimide group, an allophanate group, a urea group, a biuret group, a uretdione group, a uretonimine group, an isocyanulate group, or an oxazoline group.

The oil phase may contain additives such as a charge control agent.

Charge Control Agent

Specific examples of the charge control agent include, but are not limited to, known charge control agents such as Nigrosine dyes, triphenylmethane dyes, metal complex dyes including chromium, chelate compounds of molybdic acid, Rhodamine dyes, alkoxyamines, quaternary ammonium salts (including fluorine-modified quaternary ammonium salts), alkylamides, phosphor and compounds including phosphor, tungsten and compounds including tungsten, fluorine-containing activators, metal salts of salicylic acid, and metal salts of salicylic acid derivatives.

Specific examples of the procurable charge control agents include, but are not limited to, BONTRON 03 (Nigrosine dyes), BONTRON P-51 (quaternary ammonium salt), BONTRON S-34 (metal-containing azo dye), E-82 (metal complex of oxynaphthoic acid), E-84 (metal complex of salicylic acid), and E-89 (phenolic condensation product), which are manufactured by Orient Chemical Industries Co., Ltd.; TP-302 and TP-415 (molybdenum complex of quaternary ammonium salt), which are manufactured by Hodogaya Chemical Co., Ltd.; COPY CHARGE PSY VP2038 (quaternary ammonium salt), COPY BLUE (triphenyl methane derivative), COPY CHARGE NEG VP2036 and NX VP434 (quaternary ammonium salt), which are manufactured by Hoechst AG; LRA-901, and LR-147 (boron complex), which are manufactured by Japan Carlit Co., Ltd.; copper phthalocyanine, perylene, quinacridone, azo pigments and polymers having a functional group such as a sulfonate group, a carboxyl group, and a quaternary ammonium group. The charge control agent is used in an amount within a range in which the charge control agent demonstrates its capability without an adverse impact on the fixability. Its proportion to toner is preferably from 0.5 to 5 percent by mass or less and more preferably from 0.8 to 3 percent by mass.

Wax

Wax is not particularly limited and can be suitably selected to suit to a particular application. For example, a releasing agent having a low melting point of from 50 to 120 degrees C is preferable. A releasing agent with a low melting point efficiently works at the interface between a fixing roller and the toner when dispersed with the resin mentioned above. For this reason, hot offset resistance becomes good even in an oil-free configuration, in which a releasing agent like oil is not applied to a fixing roller.

The releasing agent preferably includes waxes. Specific examples of such waxes include, but are not limited to, natural waxes including: vegetable waxes such as carnauba wax, cotton wax, Japan wax, and rice wax; animal waxes such as bee wax and lanolin; mineral waxes such as ozokerite; and petroleum waxes such as paraffin, microcrystalline, and petrolatum. In addition to these natural waxes, synthesis hydrocarbon waxes such as Fischer-Tropsch wax and polyethylene wax and synthesis wax such as ester, ketone, and ether are also usable. Furthermore, aliphatic acid amide such as 12-hydroxystearic acid amide, stearic acid amide, phthalic acid anhydride imide, and chlorinated hydrocarbons; crystalline polymer resins having a low molecular weight such as homo polymers, for example, poly-n-stearylic methacrylate and poly-n-lauryl methacrylate, and copolymers (for example, copolymers of n-stearyl acrylate-ethylmethacrylate); and crystalline polymer having a long alkyl group in the branched chain are also usable. These can be used alone or in combination.

Plant-derived wax is preferable to reduce the environmental burden.

The melting point of wax is not particularly limited and can be suitably selected to suit to a particular application. The melting point is preferably from 50 to 120 degrees C and more preferably from 60 to 90 degrees C. A melting point of wax of 50 degrees C or higher prevents an adverse impact of wax on the high temperature storage stability and a melting point of 120 degrees C or lower prevents cold offset at low temperatures during fixing. The melt-viscosity of wax is preferably from 5 cps to 1,000 cps and more preferably from 10 cps to 100 cps at a temperature 20 degrees C higher than the melting point of the wax (releasing agent). A melt-viscosity of 5 cps or more prevents the degradation of the releasability. A melt-viscosity of 1,000 cps or less will suffice to demonstrate the hot offset resistance and low temperature fixability of a releasing agent. The proportion of wax to the toner mentioned above is not particularly limited and can be suitably selected to suit to a particular application. For example, it is preferably from 0 to 40 percent by mass and more preferably from 3 to 30 percent by mass.

Method of Manufacturing Resin Particle

The method of manufacturing the resin particle of the present embodiment is described below. The method of manufacturing the resin particle of the present embodiment includes preparing an oil phase, preparing an aqueous phase, phase inversion emulsifying, solvent-removing, aggregating, and fusing. The method may include other optional processes such as shelling, rinsing, drying, annealing, and adding an external additive.

Preparing Oil Phase

In preparing an oil phase, feedstock of the resin particle including resin (amorphous and crystalline resin), PET or PBT, and other optional materials such as a colorant, polymers (precursors of amorphous polyester resin), and wax are dissolved or dispersed in an organic solvent. Some of these optional materials can be added during aggregating described later.

The method of preparing the oil phase is not particularly limited and can be selected to suit to a particular application. One way of preparing is to gradually add raw materials such as resin to an organic solvent during stirring to dissolve or disperse them.

For dispersion, known dispersers such as a bead mill or disk mill can be used.

Each of the materials in preparing an oil phase can be the same as that mentioned in Resin Particle. These can be used alone or in combination.

At least one of the resins (amorphous resin and crystalline resin) is preferably a biomass-derived resin.

The organic solvent is not particularly limited and can be suitably selected to suit to a particular application. It is preferably a volatile solvent having a boiling point of lower than 100 degrees C to remove the organic solvent later.

Specific examples of the organic solvent include, but are not limited to, toluene, xylene, benzene, carbon tetrachloride, methylene chloride, 1,2-dichloroethane, 1,1,2-trichloroethane, trichloroethylene, chloroform, monochlorobenzene, dichloroethylidene, methyl acetate, ethyl acetate, butyl acetate, methylethyl ketone, methylisobuthyl ketone, methanol, ethanol, and isopropyl alcohol. These can be used alone or in combination.

A resin with a polyester backbone is preferable to dissolve or disperse it in an organic solvent such as ester-based solvents including methyl acetate, ethyl acetate, and butyl acetate or ketone-based solvents including methylethyl ketone and methyl isobutyl ketone to achieve high solubility. Of these, methyl acetate, ethyl acetate, and methyl ethyl ketone are particularly preferable as organic solvents to easily purge a dispersion of the organic solvent later.

The proportion of the organic solvent has no particular limit and can be suitably selected to suit to a particular application. For example, the proportion is preferably from 40 to 300 parts by mass, more preferably from 60 to 140 parts by mass, and furthermore preferably from 80 to 120 parts by mass to 100 parts by mass of the raw materials of a resin particle.

Preparing Aqueous Phase

An aqueous phase (aqueous medium) is prepared in the process of preparing an aqueous phase.

The aqueous medium is not particularly limited and can be suitably selected among known media to suit to a particular application. It includes, for example, water, a solvent miscible with water, and a mixture thereof. The concentration of an organic solvent is preferably not greater than the saturation concentration to deionized water in terms of granularity.

The solvent miscible with water is not particularly limited and can be suitably selected among known solvents to suit to a particular application. It includes, for example, alcohol, dimethyl formamide, tetrahydrofuran, cellosolves, lower ketones, and esters.

Specific examples of the alcohols include, but are not limited to, methanol, isopropanol, and ethylene glycol.

Specific examples of the lower ketones include, but are not limited to, acetone and methyl ethyl ketone.

A specific example of the esters is ethyl acetate.

These can be used alone or in combination.

Phase-transfer Emulsification

The oil phase obtained in preparing an oil phase is atomized in the phase transfer emulsification process.

After the oil phase is neutralized, deionized water is added to the neutralized oil phase to carry out emulsification by phase-transfer from the water-in-oil liquid dispersion to an oil-in-water liquid dispersion, thus obtaining an atomized liquid dispersion.

Phase transfer emulsification is conducted by agitation.

This phase transfer emulsification is carried out with a typical stirrer or disperser during uniform mixing and dispersing.

The stirring blade is not particularly limited and can be suitably selected according to viscosity of a solution.

Examples thereof include, but are not limited to, low-viscosity stirring blades such as a paddle and a propeller, medium-viscosity stirring blades such as an anchor and a maxblend, and high-viscosity stirring blades such as a helical ribbon. The disperser is not particularly limited. It includes, but it not limited to, an ultrasonic dispersing machine, a bead mill, a ball mill, a roll mill, a homomixer, an ultramixer, a disper mixer, a penetration-type high-pressure dispersing machine, a collision-type high-pressure dispersing machine, a porous-type high-pressure dispersing machine, an ultrahigh-pressure homogenizer, and an ultrasonic homogenizer. Typical stirrers can be used together with a disperser.

Of these, paddles and anchors are preferable to adjust the volume average particle diameter of a dispersion (oil droplet) to the preferable range mentioned above.

As the base for neutralizing the oil phase, any of a basic inorganic compound and a basic organic compound can be used.

Specific examples of the basic inorganic compound include, but are not limited to, sodium hydroxide, potassium hydroxide, lithium hydroxide, ammonia, sodium carbonate, sodium hydrogen carbonate, potassium carbonate, potassium hydrogen carbonate, and ammonia. Specifci examples of the basic organic compound include, but are not limited to, N,N-dimethylethanolamine, N,N-diethylethanolamine, triethanolamine, tripropanolamine, tributanolamine, triethylamine, n-propylamine, n-butylamine, isopropylamine, monomethanolamine, morpholine, methoxypropylamine, pyridine, vinylpyridine, and isophoronediamine.

In the case of a stirring blade, conditions such as the number of rotations, stirring time, and stirring temperature are not particularly limited and can be suitably selected to suit to a particular application.

The number of rotations is not particularly limited and preferably 100 to 1,000 rotation per minute (rpm) and more preferably from 200 to 600 rpm.

The stirring time and the stirring temperature are not particularly limited and can be suitably selected to suit to a particular application.

Optionally, it is possible to use a dispersant. The dispersant is not particularly limited and any known dispersion agent can be suitably used.

Specific examples include, but are not limited to, surfactants, inorganic compound dispersants sparingly soluble in water, and polymeric protective colloids. These can be used alone or in combination. Of these, surfactants are preferable.

The surfactant mentioned above has no particular limit and can be suitably selected to suit to a particular application. For example, anionic surfactants, nonionic surfactants, cationic surfactants, and amphoteric surfactants are usable.

The anionic surfactant is not particularly limited and can be suitably selected to suit to a particular application.

Specific examples include, but are not limited to, alkylbenzene sulfonates, $\alpha$-olefin sulfonates, and phosphate esters. Of these, compounds having a fluoroalkyl group are preferable.

Removal of Solvent

One way of removing the organic solvent from the thus-prepared colored liquid dispersion of fine particles is to completely evaporate and remove the organic solvent in liquid droplets by gradually raising the temperature of the entire system during stirring.

Another way is to spray the obtained colored fine particle dispersion in a dried atmosphere during stirring to completely remove the organic solvent in droplets. Alternatively, it is possible to evaporate and remove an organic solvent under a reduced pressure while stirring the colored liquid dispersion of fine particles. The latter two methods can be used with the first one.

The dried atmosphere into which the colored fine particle dispersion is sprayed is obtained by heating air, nitrogen, carbon dioxide gas, and combustion gases. The air stream heated to temperatures higher than the highest boiling point of all of the solvents in the emulsion dispersion is normally used. A drying device such as a spray dryer, a belt dryer, and a rotary kiln is used to quickly dry a dispersant, achieving the desired quality.

The colored liquid dispersion of fine particles is obtained by the methods described above.

Aggregation

ext, the colored liquid dispersion of fine particles obtained is agitated to get aggregated particles with a target particle size.

For aggregation, a method of aggregation known in the art like adding a flocculant or adjusting pH is used. Such a flocculant can be added as it is. However, an aqueous solution containing a flocculant is preferable to avoid a locally high concentration. In addition, it is preferable to slowly add an aggregated salt while the particle diameter of a colored particle is monitored.

The temperature of a liquid dispersion during aggregation is preferably close to the Tg of a resin to be used. The aggregation speed becomes slow at excessively low temperatures, lowering the efficiency. Conversely, the aggregation speed becomes too fast at excessively high temperatures, resulting in increasing the production of coarse particles, which degrades the particle size distribution.

Aggregation is caused to stop when the particle grows to a target particle size. Aggregation can be stopped by a method including: adding a low valence salt or chelate agent; adjusting pH; lowering the temperature of a liquid dispersion; or decreasing the concentration by adding much amount of an aqueous medium.

The liquid dispersion containing colored aggregated particles is obtained by the methods described above.

In the aggregation, wax can be added as a releasing agent. In such a case, aggregated particles in which wax

or a crystalline are uniformly dispersed are obtained by aggregating a liquid dispersion in which wax is dispersed in an aqueous medium or after mixing with a colored fine particle liquid dispersion.

Flocculant

Any known flocculant can be used. Examples include, but are not limited to, metal salts of monovalent metals such as sodium and potassium, metal salts of divalent metals such as calcium and magnesium, and metal salts of trivalent metals such as iron and aluminum.

Fusing

The aggregated particles obtained are fused by heating to reduce the roughness of the particles, thus obtaining spheroidized particles. To fuse the aggregated particles, the liquid dispersion of the colored aggregated particle is heated during stirring. The liquid temperature is preferably around the Tg of a resin used.

Forming Shell

A shell layer is formed around the spheroidized particle obtained during fusing.

There is no specific limitation to the method of forming a shell layer and any method known in the art can be suitably selected to suit to a particular application. One way of forming a shell layer is to prepare a spheroisized particle with a target particle size in fusing, add an amorphous resin to the particle, and repeat aggregation and fusing.

Rinsing and Drying

The toner particle liquid dispersion obtained by the method described above contains auxiliary materials such as aggregated salts other than the toner particles. The liquid dispersion should be rinsed to extract the toner particles alone. A method such as centrifugation, filtering under reduced pressure, and filter pressing are employed to rinse the toner particle. The method is not particularly limited in the present disclosure. Any of the methods mentioned above obtains a cake of toner particles. Suppose more than one operation of rinsing is required. In that case, the cake obtained is repeatedly dispersed in an aqueous medium to produce a slurry and extract resin particles from the slurry by one of the above-mentioned methods. Alternatively, auxiliary materials held in colored toner particles can be rinsed by a passage of an aqueous medium through a cake if filtrating under reduced pressure or filter pressing is employed. The aqueous medium for use in rinsing is water or a solvent mixture of water with alcohol such as methanol and ethanol. To reduce the burden on the environment, water is preferable.

Since the rinsed resin particles hold a considerable amount of water inside, the resin particles alone can be obtained by removing the aqueous medium through drying. In the drying method, it is possible to use a drier such as a spray drier, vacuum freeze drier, vacuum drier, ventilation rack drier, mobile rack drier, fluid bed drier, rotary drier, and stirring drier. The dried toner particle is preferably further dried until the moisture in the particle is less than 1 percent. The dried colored resin particles agglomerate softly. If this softly-aggregated particle is not convenient for use, it is suitable to pulverize it with a device such as a jet mill, Henschel mixer, super mixer, coffee mill, Oster blender, and food processor to loosen it.

Annealing

If a crystalline resin is added in the aggregation, the aggregated resin is subjected to annealing after drying to phase-separate the amorphous resin from the crystalline resin, thereby enhancing the fixability. Specifically, the resin annealed is stored at around the Tg for 10 or more hours.

External Additive

Additives such as inorganic fine particles, fine polymer particles, and a cleaning improver can be added to or mixed with the toner particle obtained in an embodiment of the present invention to impart flowability, chargeability, and cleaning property.

Specific examples of such mixing methods include, but are not limited to, a method in which an impact is applied to a mixture with a blade rotating at a high speed and a method in which a mixture is put into a jet air to collide particles against each other or complex particles to a suitable collision plate.

Specific examples of such devices for admixing include, but are not limited to, ONG MILL (manufactured by HOSOKAWA MICRON CO., LTD.), modified I TYPE MILL (manufactured by Nippon Pneumatic Mfg. Co., Ltd.) in which

the air pressure of pulverization is reduced, HYBRIDIZATION SYSTEM (manufactured by NARA MACHINE CO., LTD.), KRYPTRON SYSTEM (manufactured by KAWASAKI HEAVY IUDUSTRIES, LTD.), and automatic mortars.

External Additive

The inorganic fine particle preferably has a primary particle diameter of from 5 nm to 2 μm, and more preferably from 5 nm to 500 nm. In addition, the specific surface area of such inorganic particulates measured by the BET method is preferably from 20 to 500 $m^2/g$. The proportion of this inorganic fine particle to a toner is preferably from 0.01 to 5 percent by mass.

Specific examples of such inorganic fine particles include, but are not limited to, silica, alumina, titanium oxide, barium titanate, magnesium titanate, calcium titanate, strontium titanate, zinc oxide, tin oxide, quartz sand, clay, mica, sand-lime, diatom earth, chromium oxide, cerium oxide, red iron oxide, antimony trioxide, magnesium oxide, zirconium oxide, barium sulfate, barium carbonate, calcium carbonate, silicon carbide, and silicon nitride.

The fine polymer particles include, but are not limited to, polystyrene, methacrylates, and acrylates obtained by soap-free emulsion polymerization, suspension polymerization, or dispersion polymerization, and polycondensed particles such as silicone, benzoguanamine, and nylon, and polymer particles of thermocuring resin.

The external additive such as a fluidizer can be hydrophobized by surface treatment to enhance the hydrophobicity and prevent the deterioration of the fluidity and chargeability in a high humidity environment. Preferred specific examples of surface treatment agents include, but are not limited to, silane coupling agents, silyl agents, silane coupling agents having a fluorine alkyl group, organic titanate coupling agents, aluminum-based coupling agents, silicone oil, and modified-silicone oil.

Cleaning improvers remove a development agent remaining on an image bearer such as a photoconductor and a primary transfer body.

Specific examples include, but are not limited to, zinc stearate, calcium stearate and metal salts of fatty acid acids such as stearic acid and polymer fine particles such as polymethyl methacrylate fine particles and polystyrene fine particles, which are prepared by a method such as soap-free emulsion polymerization. Such polymer particulates preferably have a relatively sharp particle size distribution and a volume average particle diameter of from 0.01 to 1 μm.

The resin particle of the present embodiment has properties as described above, so it can be used as a material for image forming such as a toner, a developing agent, a toner set, a toner accommodating unit, and an image forming apparatus.

Toner

The toner of the present embodiment contains the resin particle relating to an embodiment of the present invention and can be formed of the resin particle relating to the embodiment.

Using the resin particle of the embodiment for a toner reduces environmental burden and demonstrates excellent low temperature fixability and chargeability even with a plant-derived resin. The resin can thus provide images with excellent image quality.

Developing Agent

The developing agent of an embodiment of the present invention contains the toner relating to one embodiment of the present invention and other optional components such as a carrier. The developing agent can thus stably form quality images with excellent transfer properties and chargeability.

The developing agent can be a one-component or two-component developing agent. A two-component developing agent is preferable for a high-performance printer that supports high speed information processing of late to enjoy a longer working life.

As for the toner relating to an embodiment of the present invention used as a one-component development, the toner particle size almost never changes upon toner replenishment. Due to this stable toner particle size, the toner is less likely to form a film on the developing roller and fusion-bond on the members such as a blade for regulating the thickness of the toner layer. The toner can thus produce quality images with good and stable developability even after agitating in the developing device for an extended period of time.

The toner relating to an embodiment of the present invention used as a two-component developing agent can be mixed with a carrier. As for the toner according to an embodiment of the present invention used as a two-component development, the toner particle size does not vary upon toner replenishments for an extended period of time. Due to this stable toner particle size, the toner can thus produce quality images with good and stable developability even after the toner is agitated in the developing device for an extended period of time.

The content of the carrier in a two-component developing agent can be suitably selected to suit to a particular

application. The content is preferably from 90 to 98 parts by mass and more preferably from 93 to 97 parts by mass to 100 parts of a two-component developing agent.

The developing agent of an embodiment pf the present invention can be suitably used for image formation by various known electrophotography such as a magnetic one-component developing method, a non-magnetic one-component developing method, and a two-component developing method.

Carrier

The carrier is not particularly limited and can be suitably selected to suit to a particular application. Preferably, a carrier contains a core material and a resin layer (cover layer) covering the core material.

Core Material

The material of the core material is not particularly limited and can be suitably selected to suit to a particular application.

Specific examples include, but are not limited to, a manganese-strontium-based material of from 50 to 90 emu/g and a manganese-magnesium-based material of from 50 to 90 emu/g. To achieve a suitable image density, using a high magnetized material such as powdered iron not less than 100 emu/g and magnetite from 75 to 120 emu/g is preferable. Low magnetized materials such as copper-zinc based material having 30 to 80 emu/g are preferable because it can reduce an impact of the developing agent in a filament state on a photoconductor and is advantageous to enhance the image quality. These can be used alone or in combination.

The volume average particle diameter of the core material is not particularly limited and can be suitably selected to suit to a particular application. For example, the volume average particle diameter is 10 to 150 μm and more preferably 40 to 100 μm. A volume average particle diameter of 10 or more μm does not cause a problem of increasing fine carrier with low magnetization per particle, resulting in scattering of the carrier. Conversely, a volume average particle diameter of 150 or less μm prevents a problem of toner scattering resulting from a decreased specific surface area of the carrier. This scattering leads to degrading the representation of a solid portion especially in full color printing with many solid portions.

Resin Layer

The ink layer may contain resin and other optional other components. The resin used in the resin layer can be a material known in the art that can be adequately charged. It includes, but is not limited to, a silicone resin, acrylic resin, or a combination thereof. Preferably, the composition for forming a resin layer contains a silane coupling agent.

The resin layer preferably has an average thickness of 0.05 to 0.50 μm.

Measuring Method

SP Value of Resin

In the present disclosure, the SP value is calculated by Fedors method based on the amount of the monomer used in manufacturing.

The monomer of unknown monomer compositions can be identified in the following manner.

Calculation Method and Analysis of PET as Toner Composition Component

The content of PET can be calculated by any method. One way of analyzing is to separate each component from a toner using a gel permeation chromatography (GPC) and analyze each separated component as follows to calculate the mass ratio of each component.

In addition, the main components can be deducible from soft decomposition in methylaytion of the ester linking part of a resin structure according to the gas chromatography mass analysis at 300 degrees C using a reactive agent (10 percent solution of tetramethyl ammonium hydroxide (TMAH) and methanol). Then the calibration curve is created based on total ion current chromatograph (TICC) strength to conduct quantitative analysis.

One way of separating each component by GPC is as follows.

In the GPC measuring using THF as a mobile phase, the eluate is subjected to preparatory work by, for example, a fraction collector, followed by summing up the fractions corresponding to the desired molecular weight portion of the entire area of the elution curve.

The resulting elution is condensed and dried with an instrument such as an evaporator. Then the solid portion

is dissolved in a deuterated solvent such as deuterated chloroform or THF followed by $^1$H-NMR measuring. The ratios of compositional monomers of the resin in the eluted components are calculated based on the integrated ratio of each element.

In another method, an eluate is condensed followed by hydrolysis using a compound such as sodium hydroxide. The resulting hydrolyzate is subjected to quantitative and qualitative analysis using high-performance liquid chromatography (HPLC) to calculate the ratio of each compositional monomer.

Separating Method of Toner Compositional Component

A separating method of each component for analyzing the toner mentioned above is detailed below.

To begin with, 1 g of toner is placed in 100 mL of THF followed by stirring for 30 minutes at 25 degrees C to obtain a solution in which a soluble portion is dissolved.

This solution is filtered with a 0.2 $\mu$m membrane filter to obtain the THD soluble portion in the toner.

Then this soluble portion is dissolved in THF to make a sample for GPC measuring, which is infused into GPC for use in molecular weight measuring of each resin.

Simultaneously, a fraction collector is disposed at the exit of the eluate of GPC to separate the eluate by preparatory work by a particular count. An eluate is obtained per 5 percent of the area ratio from the initiation of elution of the elution curve (initial rise of the curve).

Next, 30 mg of each elution is dissolved in 1 mL of deuterated chloroform followed by adding 0.05 percent by volume of tetra methyl silane (TMS) as a reference material.

A 5mm diameter NMR measuring glass tube is filled with this solution followed by 128 time integrations at temperatures of 23 to 25 degrees C using a nuclear magnetic resonance device (JNM-AL400, available from JEOL Ltd.) to obtain spectra.

The monomer compositions such as the PET resin contained in the toner and the constitutional ratio can be obtained from the peak integrated ratio of the spectra obtained.

Method of Measuring Carbon-14 Concentration

The carbon-14 concentration of the toner is measured by radiocarbon dating. The toner is burnt to reduce carbondioxide ($CO_2$) in the particles, thereby obtaining graphite (C). Carbon-14 concentration of graphite is measured by an Accelerator Mass Spectroscopy (AMS), available from Beta Analytic.

Confirmation of Presence of Core-shell Structure

Observation and Measuring by TEM

The toner manufactured is embedded and cured. An ultra thin piece with a thickness of about 100 nm of the toner is prepared with an ultramicrotome (ULTRACUT UCT, using a diamond knife, available from Leica Corporation).

The sample is exposed to gas of ruthenium tetroxide, osmium tetroxide, or another dyeing agent to distinguish the crystalline polyester resin phase from the other portions. The time spent in the exposure is appropriately adjusted depending on the contrast during observation. The crystalline polyester resin phase is observed to have a lamella structure in many cases. Thereafter, the sample is observed with TEM, JEM-2100, available from JEOL Ltd. at an accelerating voltage of 100 kV. Depending on the compositions of the crystalline polyester resin and amorphous polyester resin, they can be distinguished without dyeing. In such a case, the structure is evaluated undyed. The composition can be contrasted by another method such as selective etching. Observing and evaluating the polyester resin portion using a TEM is also allowed after such a pre-treatment.

Toner Accommodating Unit

The toner accommodating unit in the present disclosure contains toner in a unit capable of accommodating the toner. The toner accommodating unit includes a toner accommodating container, a developing device, and a process cartridge.

The toner accommodating container is a vessel containing a toner.

The developing unit has a device for accommodating toner and developing with the toner.

The process cartridge integrally includes at least an image bearer and a developing device, accommodates toner, and is detachably attachable to an image forming apparatus. The process cartridge may further include at least

one member selected from a charger, an exposure, and a cleaning device.

Image Forming Apparatus

Next, an embodiment of forming images with the image forming apparatus of the present disclosure is described with reference to FIG. 1. One of the image forming apparatuses in the present embodiment is a printer. However, the image forming apparatus is not particularly limited to an apparatus such as a printer, a photocopier, a facsimile machine, or a multifunction peripheral as long as it can form images with toner.

An image forming apparatus 200 includes a sheet feeding unit 210, a conveyance unit 220, an image forming unit (latent electrostatic image forming device) 230, a transfer unit (transfer device) 240, and a fixing unit (fixing device) 250.

The sheet feeding unit 210 includes a sheet feeding cassette 211 on which sheets to be fed are piled and a feeding roller 212 that feeds a sheet (recording medium) P piled on the feeding cassette 211 one by one.

The conveyance unit 220 includes a roller 221 for conveying the sheet P fed by the feeding roller 212 toward the transfer unit 240, a pair of timing rollers 222 for pinching the front end of the sheet P conveyed by the roller 221 at a standby position and sending out the sheet P to the transfer unit 240 at a particular timing, and ejection rollers 223 for ejecting the sheet P on which toner is fixed by the fixing unit 250 to an ejection tray 224.

The image forming unit 230 includes an image forming unit 234Y that forms an image using a developing agent containing yellow toner, an image forming unit 234C that forms an image using a developing agent containing cyan toner, an image forming unit 234M that forms an image using a developing agent containing magenta toner, and an image forming unit 234K that forms an image using a developing agent containing black toner, sequentially standing from left to right in the drawing with a particular interval. The image forming unit 230 also includes an irradiator 233.

An arbitrary image forming unit of the image forming units 234Y, 234C, 234M, and 234K is called an image forming unit.

In addition, the developing agent contains toner and carrier. The four image forming units have substantially the same structure except for the individual developing agents used for respective image forming units.

The transfer unit 240 includes a driving roller 241, a driven roller 242, an intermediate transfer belt 243 disposed rotatable counterclockwise in the drawing in accordance with the drive of the driving roller 241, a primary transfer roller (244Y, 244C, 244M, and 244K) disposed facing the drum photoconductor (latent electrostatic image bearer) 231 with the intermediate transfer belt 243 therebetween, and a secondary facing roller 245 and a secondary transfer roller 246 disposed facing each other at the point of the toner image transferred to the sheet P with the intermediate transfer belt 243 therebetween.

A fixing device 250 with a heater inside includes a fixing belt 251 for heating the sheet P and a pressing roller 252 for forming a nip with the fixing belt 251 by rotatably pressing it. Heat and pressure are applied to the color toner image on the sheet P at the nipping portion, thereby fixing the color toner image. The sheet P on which the color toner image is fixed is ejected to the ejection tray 224 by the ejection rollers 223, which completes a series of image forming process.

Process Cartridge

The process cartridge relating to the present disclosure is made to be detachably attachable to an image forming apparatus. It includes at least a latent electrostatic image bearer and a developing device that renders the latent electrostatic image visible with a developing agent containing the toner of the present disclosure to form a toner image. The process cartridge of the present disclosure furthermore includes other optional devices.

The developing device includes at least a developing agent container that contains a developing agent and a developing agent bearer that bears and conveys the developing agent in the developing agent container. The developing device may furthermore optionally include a regulating member for regulating the thickness of the developing agent borne on the bearer.

FIG. 2 is a diagram illustrating an example of the process cartridge relating to the present disclosure. The process cartridge 110 includes a drum photoconductor (latent electrostatic image bearer) 10, a corona charger 58, a developing device 40, a transfer roller 80, and a cleaner 90 and prints an image on a transfer sheet 95. The drum photoconductor 10 is irradiated with L (beams of light).

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless

otherwise specified.

EXAMPLES

Hereinafter, the present disclosure is described in more detail based on Examples, but the technical scope of the present disclosure is not limited to thereto.
"Parts" represents parts by mass and "percent" represents percent by mass unless otherwise specified in the following description.

Synthesis of Amorphous Polyester Resin A-1

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration tube, a stirrer, and a thermocouple at a molar ratio of propylene glycol to the adduct of bisphenol A with 2 mols of propylene oxide at 60:40, a molar ratio of terephthalic acid to succinic acid at 86:14, and a molar ratio of hydroxyl group to carboxyl group, OH to COOH, at 1.1:1.
Recycled PET flake was added at 15 percent and allowed to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin A-1.

Synthesis of Amorphous Polyester Resin A-2

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration tube, a stirrer, and a thermocouple at a molar ratio of propylene glycol to the adduct of bisphenol A with 2 mols of propylene oxide at 60:40, a molar ratio of terephthalic acid to succinic acid at 86:14, and a molar ratio of hydroxyl group to carboxyl group, OH to COOH, at 1.1:1.
Recycled PET flake was added at 25 percent and allowed to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin A-2.

Synthesis of Amorphous Polyester Resin A-3

Plant-derived propylene glycol, terephthalic acid, and plant-derived succinic acid were placed in a four-necked flask equipped with a nitrogen introducing tube, a dehydration tube, a stirrer, and a thermocouple at a molar ratio of terephthalic acid to succinic acid of 86:14 and a molar ratio of hydroxyl group to carboxyl group, OH to COOH, at 1.1:1.
Recycled PET flake was added at 30 percent and allowed to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin A-3.

Synthesis of Amorphous Polyester Resin A-4

Plant-derived propylene glycol, terephthalic acid, and plant-derived succinic acid were placed in a four-necked flask equipped with a nitrogen introducing tube, a dehydration tube, a stirrer, and a thermocouple at a molar ratio of terephthalic acid to succinic acid of 86:14 and a molar ratio of hydroxyl group to carboxyl group, OH to COOH, at 1.1:1.
Recycled PET flake was added at 45 percent and allowed to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin A-4.

Synthesis of Amorphous Polyester Resin A-5

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration tube, a stirrer, and a thermocouple at a molar ratio of propylene glycol to the adduct of bisphenol A with 2 mols of propylene oxide of 60:40, a molar ratio of terephthalic acid to succinic acid of 86:14, and a molar ratio of hydroxyl group to carboxyl group, OH to COOH, of 1.1:1 followed by allowing to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin A-5.

Synthesis of Amorphous Polyester Resin B-1

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration tube, a stirrer, and a thermocouple at a molar ratio of propylene glycol to the adduct of bisphenol A with 2 mols of propylene oxide at 30:70, a molar ratio of terephthalic acid to succinic acid at 86:14, and a molar ratio of hydroxyl group to carboxyl group, OH to COOH, at 1.1:1.

Recycled PET flake was added at 10 percent and allowed to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin B-1.

Synthesis of Amorphous Polyester Resin B-2

Amorphous Polyester Resin A-1 was defined as Amorphous Polyester Resin B-2.

Synthesis of Amorphous Polyester Resin B-3

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration tube, a stirrer, and a thermocouple at a molar ratio of propylene glycol to the adduct of bisphenol A with 2 mols of propylene oxide at 60:40, a molar ratio of terephthalic acid to succinic acid at 86:14, and a molar ratio of hydroxyl group to carboxyl group, OH to COOH, at 1.1:1.

Recycled PET flake was added at 30 percent and allowed to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin B-3.

Synthesis of Amorphous Polyester Resin B-4

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration tube, a stirrer, and a thermocouple at a molar ratio of propylene glycol to the adduct of bisphenol A with 2 mols of propylene oxide of 30:70, a molar ratio of terephthalic acid to succinic acid of 86:14, and a molar ratio of hydroxyl group to carboxyl group, OH to COOH, at 1.1:1 followed by allowing to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin B-4.

Synthesis of Amorphous Polyester Resin B-5

Plant-derived propylene glycol, an adduct of bisphenol A with 2 mols of propylene oxide, terephthalic acid, and plant-derived succinic acid were placed in a four-necked flask equipped with a nitrogen introducing tube, a dehydration

tube, a stirrer, and a thermocouple at a molar ratio of propylene glycol to the adduct of bisphenol A with 2 mols of propylene oxide of 60:40, a molar ratio of terephthalic acid to succinic acid of 86:14, and a molar ratio of hydroxyl group to carboxyl group, OH to COOH, at 1.1:1 followed by allowing to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin B-5.

Synthesis of Amorphous Polyester Resin MB for Master Batch

Plant-derived propylene glycol, terephthalic acid, and plant-derived succinic acid were placed in a four-necked flask equipped with a nitrogen introducing tube, a dehydration tube, a stirrer, and a thermocouple at a molar ratio of terephthalic acid to succinic acid of 86:14 and a molar ratio of hydroxyl group to carboxyl group, OH to COOH, at 1.1:1 followed by allowing to react together with titanium tetraisopropoxide (500 ppm to the resin portion) at 230 degrees C for eight hours under normal pressure and further react for four hours under a reduced pressure of from 10 to 15 mmHg. Then trimellitic anhydride was placed in the reaction container to achieve a proportion of 1 mol percent to the entire resin component followed by allowing to react at 180 degrees C for four hours under normal pressure, thereby obtaining Amorphous Polyester Resin MB for master batch.

Synthesis of Crystalline Polyester Resin C-1

Plant-derived 1,12-dodecanedioic acid and plant-derived 1,9-nonane diol were placed in a 5L four-necked flask equipped with a nitrogen introducing tube, a dehydration tube, a stirrer, and a thermocouple at a molar ratio of hydroxyl group to carboxyl group, OH/COOH, at 1.1:1. Moreover, trimellitic anhydride was added to achieve 0.047 molar ratio, followed by allowing to react together with titanium tetraisopropoxide (500 ppm to the resin portion) at 180 degrees C for ten hours. The system was then heated to 200 degrees C and allowed to react for three hours followed by allowing to react under a pressure of 8.3 kPa for two hours to obtain Crystalline Polyester Resin C-1.

Synthesis of Crystalline Polyester Resin C-2

Crystalline Polyester Resin C-2 was obtained in the same manner as in Synthesis of Crystalline Polyester Resin C-1 except that the proportion of trimellitic anhydride was changed to 0.086 molar ratio.

Synthesis of Crystalline Polyester Resin C-3

Crystalline Polyester Resin C-3 was obtained in the same manner as in Synthesis of Crystalline Polyester Resin C-1 except that plant-derived 1,12-dodecanedioic acid and plant-derived 1,9-nonane diol were replaced with plant-derived sebacic acid and plant-derived 1,6-hexane diol and the proportion of trimellitic anhydride was changed to 0.055 molar ratio.

Synthesis of Crystalline Polyester Resin C-4

Crystalline Polyester Resin C-4 was obtained in the same manner as in Synthesis of Crystalline Polyester Resin C-1 except that plant-derived 1,12-dodecanedioic acid and plant-derived 1,9-nonane diol were replaced with plant-derived sebacic acid and plant-derived ethylene glycol and the proportion of trimellitic anhydride was changed to 0.055 molar ratio.

Synthesis of Crystalline Polyester Resin C-5

Crystalline Polyester Resin C-5 was obtained in the same manner as in Synthesis of Crystalline Polyester Resin C-1 except that plant-derived 1,12-dodecanedioic acid and plant-derived 1,9-nonane diol were replaced with petroleum-derived 1,12-dodecanedioic acid and petroleum-derived 1,9-nonane diol and the proportion of trimellitic anhydride was changed to 0.086 molar ratio.

Preparation of Liquid Dispersion 1 of Crystalline Polyester Resin

A total of 350 parts of Crystalline Polyester Resin C-1, 210 parts of methylethyl ketone, and 61.8 parts of isopropyl alcohol were charged in a separable flask. The mixture was mixed and dissolved sufficiently at 50 degrees

C,followed by adding 16.24 parts of 10 percent ammonium aqueous solution dropwise. The heating temperature was lowered to 65 degrees C and deionized water was added dropwise to the resulting solution at a liquid feeding speed of 8 g/min using a liquid feeding pump during stirring to obtain a uniformly clouded liquid. Then the liquid feeding speed was increased to 12 g/min to add deionized water until the total amount of the liquid reached 1,400 parts. Thereafter, the solvent was removed under a reduced pressure to obtain Crystalline Polyester Resin Liquid Dispersion 1.

Preparation of Liquid Dispersions 2 to 5 of Crystalline Polyester Resin Liquid Dispersion

Crystalline Polyester Resin Liquid Dispersions 2 to 5 were obtained in the same manner as in Preparation of Crystalline Polyester Resin Liquid Dispersion 1 except that Crystalline Polyester Resin C-1 was changed to Crystalline Polyester Resins C-2 to C-5.

Preparation of Liquid Dispersion of Wax

A total of 180 parts of ester wax (WE-11, synthetic wax of plant-derived monomer, melting point of 67 degrees C, available from NOF CORPORATION) and 17 parts of anionic surfactant (NEOGEN SC, sodium dodecylbenzenesulfonate, available from DKS Co., Ltd.) were added to 720 parts of deionized water.

The resulting mixture was subjected to dispersion with a homogenizer to obtain Liquid Dispersion W-1 of wax while being heated to 90 degrees C. The concentration of the solid portion of the liquid dispersion of wax was 25 percent.

Preparation of Master Batch MB-1

A total of 1,200 parts of water, 500 parts of carbon black (Printex 35, available from Degussa AG, DBP oil absorption amount of 42 ml/100 mg, PH of 9.5), and 500 parts of Amorphous Polyester Resin MB for master batch were admixed with a Henschel Mixer (available from NIPPON COKE & ENGINEERING. CO., LTD.). The mixture was kneaded at 150 degrees C for 30 minutes using two rolls and rolled and cooled down followed by pulverization with a pulverizer to obtain Master Batch MB-1.

Table 1

| Example Comparative Example No. | Resin particle No. | Amorphous polyester resin | | | Crystalline polyester resin (Cpes) | Wax |
|---|---|---|---|---|---|---|
| | | B core resin | MB master batch resin | A shell resin | | |
| Example 1 | Resin particle 1 | B-1 | MB-1 | A-1 | C-2 | W-1 |
| Example 2 | Resin particle 2 | B-2 | MB-1 | A-1 | C-1 | W-1 |
| Example 3 | Resin particle 3 | B-2 | MB-1 | A-1 | C-4 | W-1 |
| Example 4 | Resin particle 4 | B-2 | MB-1 | A-1 | C-3 | W-1 |
| Example 5 | Resin particle 5 | B-2 | MB-1 | A-2 | C-3 | W-1 |
| Example 6 | Resin particle 6 | B-2 | MB-1 | A-3 | C-3 | W-1 |
| Example 7 | Resin particle 7 | B-3 | MB-1 | A-3 | C-4 | W-1 |
| Example 8 | Resin particle 8 | B-3 | MB-1 | A-4 | C-4 | W-1 |
| Comparative Example 1 | Resin particle 9 | B-1 | MB-1 | A-1 | C-5 | W-1 |
| Comparative Example 2 | Resin particle 10 | B-4 | MB-1 | A-5 | C-2 | W-1 |

(continued)

| Example Comparative Example No. | Resin particle No. | Amorphous polyester resin | | | Crystalline polyester resin (Cpes) | Wax |
|---|---|---|---|---|---|---|
| | | B core resin | MB master batch resin | A shell resin | | |
| Comparative Example 3 | Resin particle 11 | B-4 | MB-1 | A-1 | C-2 | W-1 |
| Comparative Example 4 | Resin particle 12 | B-5 | MB-1 | A-5 | C-1 | W-1 |

Example 1

Preparation of Oil Phase

A total of 100 parts of Crystalline Polyester Resin Liquid Dispersion C-2, 50 parts of Liquid Dispersion W-1 of Wax, 550 parts of Amorphous Polyester Resin B-1, and 100 parts of Master Batch MB-1 were placed in a container and mixed with a TK homomixer (available from PRIMIX Corporation) at 5,000 rpm for 60 minutes to obtain Oil Phase 1.

The number of parts by mass mentioned above represents the solid portion in each raw material.

Preparation of Aqueous Phase

A total of 990 parts of water, 20 parts of sodium dodecyl sulfate, and 90 parts of ethyl acetate were mixed and stirred to obtain a milky white liquid. This liquid was determined as Aqueous Phase 1.

Emulsification

A total of 20 parts of 28 percent ammonium water was added to 700 parts of Oil Phase 1 while being stirred with a TK homomixer at a rate of rotation of 8,000 rpm. After ten minutes mixing, 1,200 parts of Aqueous Phase 1 was slowly added dropwise to the liquid mixture to obtain Emulsified Slurry 1.

Removal of Solvent

Emulsified Slurry 1 was placed in a container equipped with a stirrer and a thermometer followed by purging Emulsified Slurry 1 of the solvent at 30 degrees C for 180 minutes to obtain Solvent-purged Slurry 1.

Preparation of Liquid Dispersion of Shell

Preparation of Solution of Shell Resin

A total of 200 parts of Amorphous Polyester Resin A-1 and 200 parts of methylethyl ketone were placed in a container followed by mixing with a TK HOMOMIXER, available from PRIMIX Corporation, at 5,000 rpm for 60 minutes to obtain Solution A-1 of Shell Resin. The oil phase obtained had a solid portion of 50 percent.

Preparation of Aqueous Phase of Shell

A total of 468 parts of water was mixed and stirred with 132 parts of methylethyl ketone. This liquid was determined as Aqueous Phase 1 of Shell.

Emulsifying Shell

A total of 5.9 parts of 28 percent ammonium water was added to 400 parts of Solution A-1 of Shell Resin to achieve a neutralization ratio of 100 percent to the acid value of Amorphous Polyester Resin A-1 in stirring with a TK Homomixer at 8,000 rotation per minute (rpm). After a 10 minutes mixing, 600 parts of Aqueous Phase 1 of Shell was slowly added dropwise to phase-transfer and emulsify Solution 1 of Shell Resin. The phase-transferred emulsion of Solution 1 of Shell Resin was purged of the solvent with an evaporator to obtain Liquid Dispersion A-1 of Shell.

Aggregation

A total of 100 parts of 3 percent solution of magnesium chloride was added dropwise to Solvent-purged Slurry 1 followed by stirring for five minutes. The mixture was then heated to 60 degrees C. A total of 200 parts of Liquid Dispersion A-1 of Shell was added when the particle diameter grew to 5.0 μm, followed by adding dropwise 100 parts of 3 percent solution of magnesium chloride. After five minutes stirring, 50 parts of an aqueous solution of sodium sulfate was added to complete the aggregation to obtain Aggregated Slurry 1.

Fusion

Aggregated Slurry 1 was stirred and heated to 70 degrees C. Aggregated Slurry 1 heated was cooled down when the average circularity reached a target of 0.957. Slurry Dispersion 1 was thus obtained.

Rinsing and Drying

(1): A total of 100 parts of Surry Dispersion 1 was filtered under a reduced pressure and 100 parts of deionized water was added to the filtered cake and mixed with a TK HOMOMIXER at 12,000 rpm for 10 minutes followed by filtering.
(2): A total of 100 parts of sodium hydroxide at 10 percent was added to the filtered cake obtained in (1) and the resulting mixture was mixed with a TK HOMOMIXER at 12,000 rpm for 30 minutes followed by filtering with under a reduced pressure;
(3): A total of 100 parts of hydrochloric acid at 10 percent was added to the filtered cake obtained in (2) and the resulting mixture was mixed by a TK HOMOMIXER (at 12,000 rpm for 10 minutes) followed by filtering; and
(4): A total of 300 parts of deionized water was added to the filtered cake obtained in (3) and the resulting mixture was mixed by a TK HOMOMIXER at a rate of rotation of 12,000 rpm for 10 minutes followed by filtering. The processes of (1) to (4) were carried out twice to obtain Filtered Cake 1.

The obtained filtered cake 1 was dried with a circulation dryer at 45 degrees C for 48 hours. The dried cake obtained was sieved with a screen with an opening of 75 μm to obtain Mother Resin Particle 1.

Treatment with External Additive

A total of 2.0 parts of an external additive, hydrophobic silica (HDK-2000, manufactured by Clariant AG), was admixed with 100 parts of Mother Resin Particle 1 using a Henschel Mixer, followed by filtering with a screen having an opening of 500 meshes to obtain Resin Particle 1.

Resin Particles 2 to 12 were prepared in the same manner as Resin Particle 1 except that the types of the wax, crystalline resin, and amorphous resin added in each process were changed as shown in Table 1.

The SP value, environmental friendliness, low temperature fixability, high temperature storage stability, filming resistance of these resin particles were evaluated. The results are shown in Table 2.

Table 2

| | | SP value | | |
|---|---|---|---|---|
| | | Core resin B | Shell resin A | CPES |
| Example 1 | Resin particle 1 | 11.5 | 11.68 | 9.7 |
| Example 2 | Resin particle 2 | 11.68 | 11.68 | 9.61 |
| Example 3 | Resin particle 3 | 11.68 | 11.68 | 10.34 |
| Example 4 | Resin particle 4 | 11.68 | 11.68 | 9.94 |

(continued)

| | | SP value | | |
|---|---|---|---|---|
| | | Core resin B | Shell resin A | CPES |
| Example 5 | Resin particle 5 | 11.68 | 11.8 | 9.94 |
| Example 6 | Resin particle 6 | 11.68 | 12.2 | 9.94 |
| Example 7 | Resin particle 7 | 11.93 | 12.2 | 10.34 |
| Example 8 | Resin particle 8 | 11.93 | 12.4 | 10.34 |
| Comparative Example 1 | Resin particle 9 | 11.5 | 11.68 | 9.7 |
| Comparative Example 2 | Resin particle 10 | 11.35 | 11.46 | 9.7 |
| Comparative Example 3 | Resin particle 11 | 11.35 | 11.68 | 9.7 |
| Comparative Example 4 | Resin particle 12 | 11.46 | 11.46 | 9.61 |
| | | ΔSP | | Environmental friendliness (resin ratio) (percent by mass) |
| | | ΔSP (core, CPES) | ΔSP (shell, CPES) | |
| Example 1 | Resin particle 1 | 1.8 | 2.0 | 34 |
| Example 2 | Resin particle 2 | 2.1 | 2.1 | 41 |
| Example 3 | Resin particle 3 | 1.3 | 1.3 | 41 |
| Example 4 | Resin particle 4 | 1.7 | 1.7 | 41 |
| Example 5 | Resin particle 5 | 1.7 | 1.9 | 43 |
| Example 6 | Resin particle 6 | 1.7 | 2.3 | 46 |
| Example 7 | Resin particle 7 | 1.6 | 1.9 | 53 |
| Example 8 | Resin particle 8 | 1.6 | 2.1 | 55 |
| Comparative Example 1 | Resin particle 9 | 1.8 | 2.0 | 24 |
| Comparative Example 2 | Resin particle 10 | 1.7 | 1.8 | 27 |
| Comparative Example 3 | Resin particle 11 | 1.7 | 2.0 | 29 |
| Comparative Example 4 | Resin particle 12 | 1.9 | 1.9 | 32 |

(continued)

| | | Effect | | |
|---|---|---|---|---|
| | | Low temperature fixability | High temperature storage stability | Compatibility to environment |
| Example 1 | Resin particle 1 | B | A | B |
| Example 2 | Resin particle 2 | B | S | A |
| Example 3 | Resin particle 3 | S | B | A |
| Example 4 | Resin particle 4 | A | B | A |
| Example 5 | Resin particle 5 | A | A | A |
| Example 6 | Resin particle 6 | A | S | A |
| Example 7 | Resin particle 7 | S | A | S |
| Example 8 | Resin particle 8 | S | S | S |
| Comparative Example 1 | Resin particle 9 | B | A | C |
| Comparative Example 2 | Resin particle 10 | A | C | C |
| Comparative Example 3 | Resin particle 11 | A | A | C |
| Comparative Example 4 | Resin particle 12 | B | C | B |

Evaluation Method

Low Temperature Fixability

A developing agent was obtained by mixing the carrier for use in imagio MP C5503, available from Ricoh Co., Ltd., with the resin particle obtained as described above to achieve a concentration of the resin particle of 5 percent by mass.

This developing agent was placed in the unit of imagio MP C5503, manufactured by Ricoh Co., Ltd. Then an oblong solid image of 2 cm × 15 cm was printed on PPC paper type 6000 <70W>, A4 grain long (GL), available from Ricoh Co., Ltd., with an amount of toner attached of 0.40 mg/cm$^2$. The image was printed using the fixing roller at different surface temperatures to check whether the remaining developed image of the solid image was fixed at a position other than the target portion, which is a phenomenon called cold offset, to evaluate low temperature fixability.

Evaluation Criteria

S: Lower than 110 degrees C
A: 110 to lower than 120 degrees C
B: 120 to lower than 130 degrees C
C: 130 or higher degrees C

High Temperature Storage Stability

A glass container for evaluating the high temperature storage stability was filled with the toner obtained and was allowed to rest in a thermostatic chamber at 50 degrees C for 24 hours.
This toner was then cooled down to 24 degrees C and subjected to the penetration test according to JIS K2235-1991 (Petroleum Waxes) format.
The evaluation criteria of the high temperature storage stability based on penetration is as follows.

Evaluation Criteria

A: 25 or more mm
B: 10 to less than 25 mm
C: Less than 10 mm

Environmental Friendliness

The ratio of the entire of the biomass-derived resin and recycled resin to the mass of the resin particle is defined as the resin ratio as shown in the following calculation formula. This resin ratio was analyzed to evaluate the environmental friendliness according to the following evaluation criteria.

$$\text{Resin ratio} = [\,(\text{biomass-derived resin} + \text{recycled resin})/\text{resin particle}] \times 100$$

Evaluation Criteria

S: Resin ratio of 50 or more percent
A: Resin ratio of 40 to less than 50 percent
B: Resin ratio of 30 to less than 40 percent
C: Resin ratio of less than 30 percent

Aspects of the present disclosure are, for example, as follows:

Aspect 1: A resin particle contains an amorphous, a crystalline resin C containing a biomass-derived resin, and at least one of polyethylene terephthalate and polybutylene terephthalate, wherein the resin particle has a core-shell structure containing a core resin and a shell resin, the core resin containing the crystalline resin C and the proportion of the total mass of the biomass-derived resin, the polyethylene terephthalate, and the polybutylene terephthalate to the resin particle at 100 percent by mass is 30 or more percent by mass.
Aspect 2: The resin particle according to Aspect 1 mentioned above, wherein the difference between the solution parameter value of the biomass-derived resin and the solution parameter value of the core resin is 1.7 or less.
Aspect 3: The resin particle according to Aspect 2 mentioned above, wherein the difference is 1.6 or less.
Aspect 4: The resin particle according to any one of Aspects 1 to 3 mentioned above, wherein the difference between the solution parameter value of the biomass-derived resin and the solution parameter value of the shell resin is 1.8 or more.
Aspect 5: The resin particle according to any one of Aspects 1 to 4 mentioned above, wherein the difference between the solution parameter value of the biomass-derived resin and the solution parameter value of the shell resin is 2.0 or more.
Aspect 6: The resin particle according to any one of Aspects 1 to 5 mentioned above, wherein the proportion is 50 or more percent by mass.
Aspect 7: A toner contains the resin particle of any one of Aspects 1 to 6 mentioned above.
Aspect 8: A toner accommodating unit accommodating the toner of Aspect 7 mentioned above.
Aspect 9: An image forming apparatus includes a latent electrostatic image bearer, a latent electrostatic image forming device for forming a latent electrostatic image on the latent electrostatic image bearer, a developing device for developing the latent electrostatic image on the latent electrostatic image bearer with the toner of Aspect 7 mentioned above to form a toner image, a transfer device for transferring the toner image onto the surface of a

recording medium, and a fixing device to fix the toner image on the surface of the recording medium.

Aspect 10: An image forming method includes forming a latent electrostatic image on a latent electrostatic image bearer, developing the latent electrostatic image formed on the latent electrostatic image bearer with the toner of Aspect 7 mentioned above to form a toner image, transferring the toner image formed on the latent electrostatic image bearer to the surface of a recording medium, and fixing the toner image on the surface of the recording medium.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

**1.** A resin particle comprising:

an amorphous resin;
a crystalline resin C comprising a biomass-derived resin; and
at least one of polyethylene terephthalate or polybutylene terephthalate,
wherein the resin particle has a core-shell structure comprising a core resin and a shell resin,
the core resin comprises the crystalline resin C, and
a proportion of a total mass of the biomass-derived resin, the polyethylene terephthalate, and the polybutylene terephthalate to the resin particle at 100 percent by mass is 30 or more percent by mass.

**2.** The resin particle according to claim 1,
wherein a difference between a solution parameter value of the biomass-derived resin and a solution parameter value of the core resin is 1.7 or less.

**3.** The resin particle according to claim 2,
wherein the difference is 1.6 or less.

**4.** The resin particle according to any one of claims 1 to 3,
wherein a difference between a solution parameter value of the biomass-derived resin and a solution parameter value of the shell resin is 1.8 or more.

**5.** The resin particle according to claim 4,
wherein the difference between the solution parameter value of the biomass-derived resin and the solution parameter value of the shell resin is 2.0 or more.

**6.** The resin particle according to any one of claims 1 to 5, wherein the proportion is 50 or more percent by mass.

**7.** A toner comprises:
the resin particle of any one of claim 1 to 6.

**8.** A toner accommodating unit accommodating the toner of claim 7.

**9.** An image forming apparatus (200) comprising:

a latent electrostatic image bearer (231Y; 231C;231M;231K: 10)
a latent electrostatic image forming device (233) to form a latent electrostatic image on the latent electrostatic image bearer (231Y; 231C;231M;231K: 10);
a developing device (234Y;234C;234M;234K:40) to develop the latent electrostatic image on the latent electrostatic image bearer (231Y; 231C;231M;231K: 10) with the toner of claim 7 to form a toner image;
a transfer device (240) to transfer the toner image onto a surface of a recording medium; and
a fixing device (250) to fix the toner image on the surface of the recording medium.

**10.** An image forming method comprising:

forming a latent electrostatic image on a latent electrostatic image bearer;
developing the latent electrostatic image formed on the latent electrostatic image bearer with the toner of claim 7 to form a toner image;
transferring the toner image formed on the latent electrostatic image bearer to a surface of a recording medium; and
fixing the toner image on the surface of the recording medium.

FIG. 1

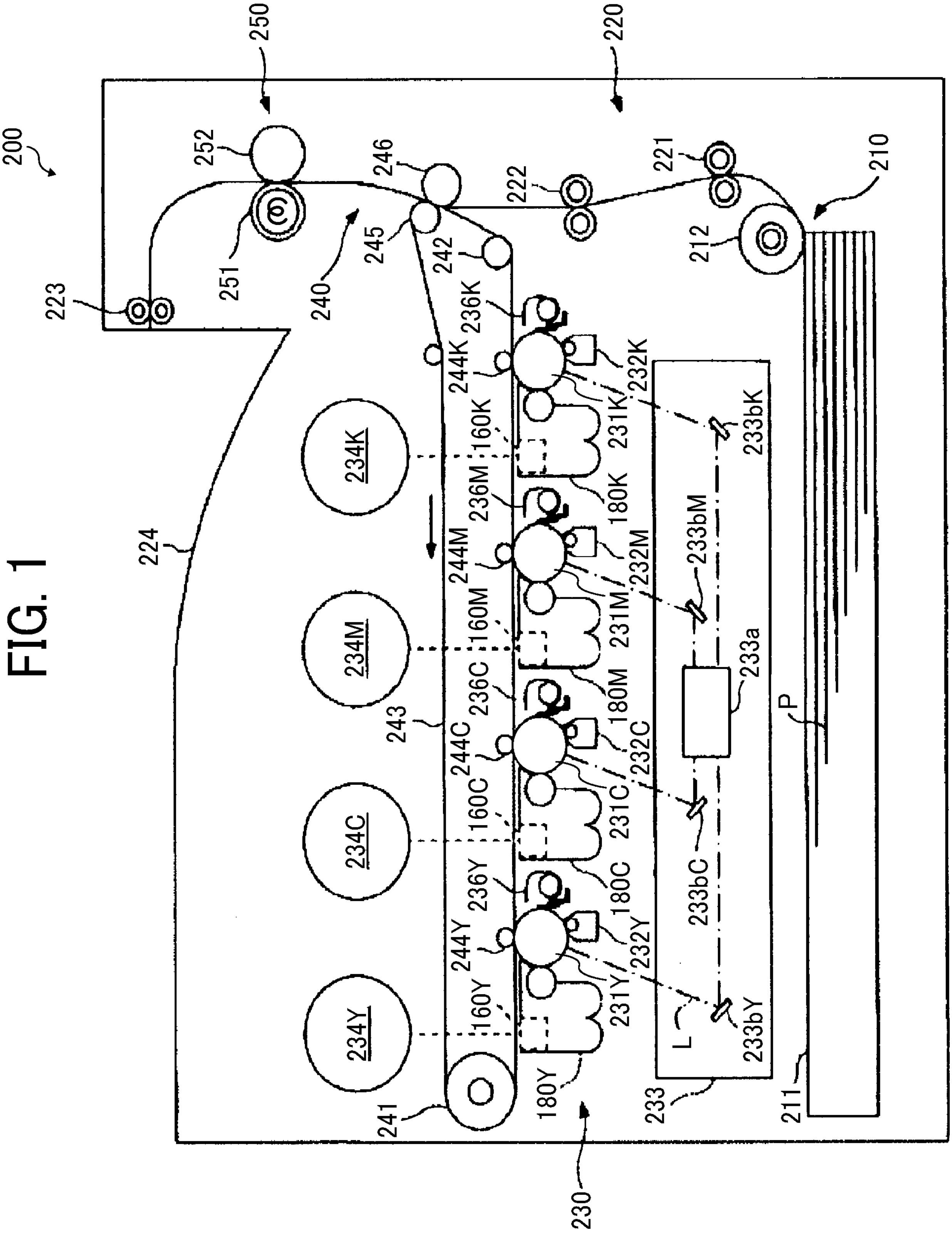
200
250
220
252
251
246
245
240
242
223
222
221
210
212
211
224
234K
234M
234C
234Y
243
241
244K
244M
244C
244Y
236K
236M
236C
236Y
160K
160M
160C
160Y
180K
180M
180C
180Y
231K
231M
231C
231Y
232K
232M
232C
232Y
233bK
233bM
233a
233bC
233bY
233
L
P
230

FIG. 2

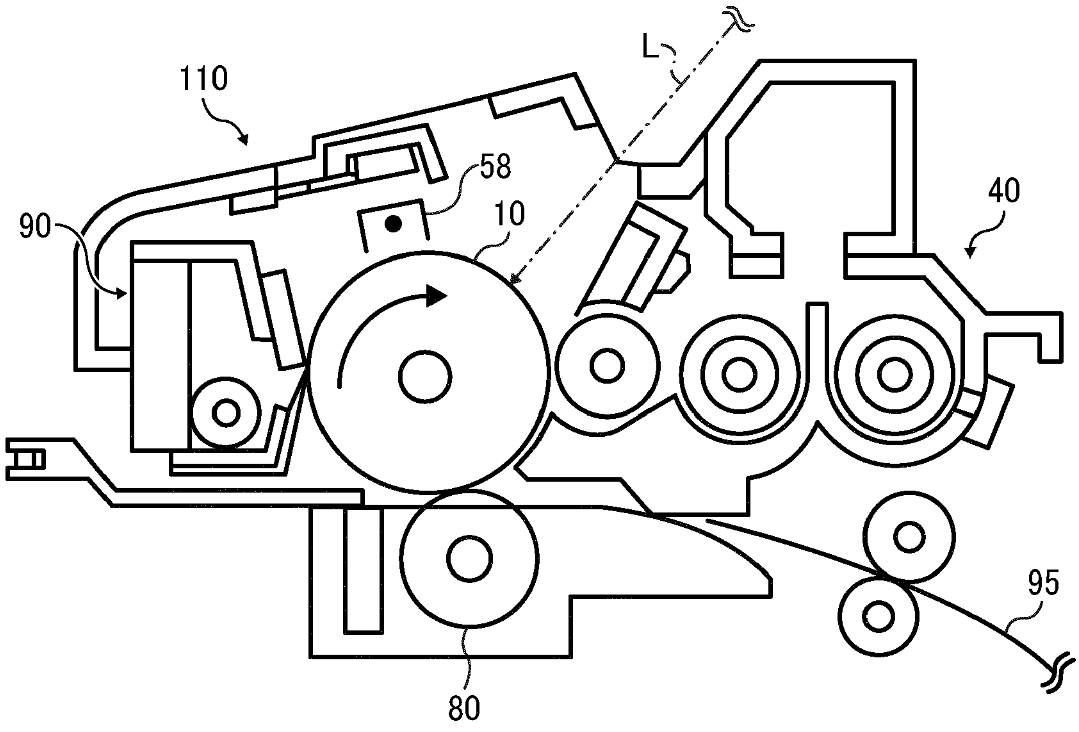

Europäisches Patentamt
European Patent Office
Office européen des brevets

# EUROPEAN SEARCH REPORT

Application Number
EP 23 21 2257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2012/258398 A1 (ZHOU KE [CA] ET AL) 11 October 2012 (2012-10-11)<br>* paragraphs [0008], [0009], [0024], [0036], [0040], [0046], [0056], [0069], [0096], [0103] *<br>* paragraphs [0108], [0123] - [0127]; example 1 *<br>* claims 9,11,12 *<br>----- | 9<br>1-8,10 | INV.<br>G03G9/087<br>G03G9/093<br>C08G63/16 |
| Y | US 2014/134533 A1 (SACRIPANTE GUERINO G [CA] ET AL) 15 May 2014 (2014-05-15)<br>* paragraphs [0005], [0019], [0023], [0026], [0030], [0081], [0082], [0098]; claim 1 *<br>----- | 1-10 | |
| Y | US 2009/047593 A1 (VANBESIEN DARYL W [CA] ET AL) 19 February 2009 (2009-02-19)<br>* paragraphs [0012], [0013], [0014] *<br>* paragraphs [0053], [0059]; claims 1,7,12,13,16,17 *<br>----- | 1-10 | TECHNICAL FIELDS SEARCHED (IPC) |
| X<br>Y | US 2011/207046 A1 (ZHOU KE [CA] ET AL) 25 August 2011 (2011-08-25)<br>* paragraphs [0020], [0021], [0029] *<br>* paragraph [0125]; example 6 *<br>* paragraphs [0127] - [0128]; example Toner Ex. 7 *<br>----- | 9<br>1-8,10 | G03G<br>C09J<br>C08G<br>C08L |
| Y | US 2010/330486 A1 (ZHOU KE [CA] ET AL) 30 December 2010 (2010-12-30)<br>* paragraphs [0008], [0009], [0015], [0019]; claim 12 *<br>----- | 1-10 | |
| Y | US 2014/134534 A1 (SACRIPANTE GUERINO G [CA] ET AL) 15 May 2014 (2014-05-15)<br>* paragraphs [0001], [0006], [0010], [0027], [0029], [0030], [0031], [0035], [0103] *<br>* claims 1,6,7,11,14,15 *<br>----- | 1-10 | |

The present search report has been drawn up for all claims

1

| Place of search | Date of completion of the search | Examiner |
|---|---|---|
| The Hague | 9 April 2024 | Vogt, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 21 2257

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| US 2012258398 A1 | 11-10-2012 | BR 102012008414 A2 | 23-06-2015 |
| | | CA 2773741 A1 | 11-10-2012 |
| | | CN 102736454 A | 17-10-2012 |
| | | DE 102012205785 A1 | 11-10-2012 |
| | | JP 5781970 B2 | 24-09-2015 |
| | | JP 2012220954 A | 12-11-2012 |
| | | KR 20120116866 A | 23-10-2012 |
| | | US 2012258398 A1 | 11-10-2012 |
| US 2014134533 A1 | 15-05-2014 | NONE | |
| US 2009047593 A1 | 19-02-2009 | NONE | |
| US 2011207046 A1 | 25-08-2011 | CA 2732067 A1 | 24-08-2011 |
| | | CN 102163019 A | 24-08-2011 |
| | | DE 102011004368 A1 | 25-08-2011 |
| | | GB 2483947 A | 28-03-2012 |
| | | KR 20110097717 A | 31-08-2011 |
| | | US 2011207046 A1 | 25-08-2011 |
| US 2010330486 A1 | 30-12-2010 | CA 2707775 A1 | 24-12-2010 |
| | | EP 2267545 A1 | 29-12-2010 |
| | | JP 5570882 B2 | 13-08-2014 |
| | | JP 2011008251 A | 13-01-2011 |
| | | US 2010330486 A1 | 30-12-2010 |
| US 2014134534 A1 | 15-05-2014 | BR 102013028225 A2 | 21-10-2014 |
| | | CA 2832607 A1 | 15-05-2014 |
| | | JP 6138021 B2 | 31-05-2017 |
| | | JP 2014098149 A | 29-05-2014 |
| | | RU 2013150709 A | 20-05-2015 |
| | | US 2014134534 A1 | 15-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022189373 A
- JP 2023175708 A
- JP 4512631 B
- JP 2009134007 A
- JP 5717615 B
- JP 2012133356 A
- JP 4050051 B